# EUROPEAN PATENT SPECIFICATION

(11) **EP 2 532 146 B1**
(45) Date of publication and mention of the grant of the patent: **31.08.2016**
(21) Application number: 11740086.1
(22) Date of filing: 02.02.2011
(51) Int. Cl.: H04L 12/58, H04L 29/06

(54) **AUTOMATIC MESSAGE GENERATION IN WIRELESS COMMUNICATION SYSTEMS**
AUTOMATISCHE NACHRICHTENERZEUGUNG IN DRAHTLOSEN KOMMUNIKATIONSSYSTEMEN
GÉNÉRATION AUTOMATIQUE DE MESSAGES DANS DES SYSTÈMES DE COMMUNICATION SANS FIL

(30) Priority: 02.02.2010 NO 20100165
(43) Date of publication of application: 12.12.2012
(73) Proprietor: Radiocrafts AS, 0484 Oslo (NO)
(72) Inventor: EVJEN, Peder, Martin, N-1472 Fjellhamar§ (NO)
(74) Representative: Acapo AS
(86) International application number: PCT/NO2011/000039
(87) International publication number: WO 2011/096818

(56) References cited:
- Radiocrafts Embedded Wireless Solutions: "MBUS User Manual", User Manual (rev. 1.0), 5 April 2009 (2009-04-05), XP055123427, Retrieved from the Internet: URL:https://web.archive.org/web/2009040508 2508/http://www.radiocrafts.com/uploads/mb us_user_manual_1_0.pdf [retrieved on 2014-06-16]
- Radiocrafts Embedded Wireless Solutions: "MBUS User Manual", User Manual (rev. 1.22), 8 March 2010 (2010-03-08), XP055123434, Retrieved from the Internet: URL:http://www.radiocrafts.com/uploads/mbu s_user_manual_1_22.pdf [retrieved on 2014-06-16]
- XILINX: "Ethernet AVB Endpoint 1.1 DS677 (v1.1.1)", PRODUCT SPECIFICATION, , 7 October 2008 (2008-10-07), pages 1-34, XP002607982, Retrieved from the Internet: URL:http://pdfserv2.datasheetpro.net/242/2 4209-ion-eth-avb-endpoint-ds677.pdf [retrieved on 2010-11-01]
- PEDER MARTIN EVJEN: "SMART METERING NEEDS SMART MODULES", METERING INTERNATIONAL EDITION, vol. 2009, no. 4, 27 November 2009 (2009-11-27), page 97, XP055123532,
- PEDER MARTIN EVJEN: "OPEN METERING SYSTEM", METERING INTERNATIONAL EDITION, vol. 2009, no. 4, 27 November 2009 (2009-11-27), pages 110-112, XP055123521,
- AMBER WIRELESS GMBH MANUAL AMB8425-M, V1.6, [Online] 28 January 2010, XP055101221 Retrieved from the Internet: <URL:http://www.amber-wireless.de/files/amb 8425-m_ma.pdf> [retrieved on 2010-11-01]

## Description

The Invention is related to implementation of automatic message generation in a wireless communication system.

### Background of the invention

In a wireless network where it is many power limited nodes, for example battery operated, which shall communicate with a concentrator, master or gateway, it is often difficult to fulfill certain timing requirements. The power limited nodes should be in sleep mode most of the time, and wake up to transmit and receive messages in a time as short as possible to reduce the energy consumption. This has been solved by having the power limited node (the slave) waking up from sleep mode and transmit a message. This message is received by the concentrator (master) which is always listening. After transmitting the message, the slave enter receive mode for a very short time, typically 2-3 ms or 3-50 ms after transmission, before it again enter sleep mode. During this short time interval the master must transmit its message if it wants to communicate with the slave. If the slave does not receive any message, it will enter sleep mode, until at a later point in time (after few minutes or hours, depending on the system requirements) when it will wake up and transmit a new message, giving the master a new opportunity for communication. If the slave receive a message from the master during this short time interval, it will enter sleep mode for a short while (typically 1-5 seconds), before it again wakes up and transmit a new message the master can respond to within a short time interval.

Such systems are often use for automatic meter reading (AMR) of battery operated meters such as gas-, water-, heat-meters. Wireless M-Bus (as described in EN 13757-4), DSMR (NTA 8130) and OMS (Open Metering System specification) are examples of such systems.

It has appeared as a challenge in such systems that a master must be able to identify many slaves, and within a very short time interval transmit a message with the correct address and correct content, adapted to each slave, without knowing exactly when the slave transmit its message. Some systems also use encryption which requires that messages to the slave must be encrypted with a key that is unique for each slave.

### Prior art

A known method which has been used is to store so-called "pre-cooked messages" in the master, which is automatically transmitted as a reply when a slave message arrives. This method has turned out to be insufficient and memory intensive when a large number of slaves shall be handled by one master.

A similar method has been used in the RC1180-MBUS2 module from Radiocrafts (see Radiocrafts MBUS User Manual rev. 1.11), where it is possible to configure the master to transmit ACK (acknowledge) if a flag has been set i the address register for a certain slave. This method has also turned out to be insufficient when many different messages should be sent to the slave during the short time interval.

Reference is also made to Manual AMB842S-M, V1.6, Released 28.01.2010 related to Wireless M-Bus radio module AMB842S-M designed as a subcomponent for wireless meter reading.

Another know usage of "Auto reply" and "pre-configured packet response" is described in Scatterweb's Software manual, wireless M-Bus stack for PAN7550, stack version v.1.0, dated 1.9.2009. It mention a "pre-configured response" for C-fields 0x53, 0x73, 0x40, 0x06 and 0x44, but does not describe in detail the method used to generate the response. It is shown a CONFIG_SET_AUTORESPONSE function where a complete packet limited to 23 bytes, including the header, can be pre-cooked and stored in the unit. This method is not sufficient when it is many slaves which need to be handled at the same time with different responses. Also, it does not take into account that different messages from the slave require different response from the master, or that command messages such as SND_UD can be longer than 23 bytes. It is said that "continuous mode" shall be used together with the auto-response, apparently to transmit the longer messages. This method is often insufficient as long messages (SND-DU) should be transmitted during a very short time interval.

### One should also refer to

https://web.archive.org/web/20090405082508/http://www.radiocrafts.com/upload s/mbus_user_manual_1_0.pdf an earlier manual from Radiocrafts.

### Brief description of the drawings

Figure 1 shows an example of an embodyment of the invention with an 8-byte adress register with 64 locations (10), a 16-bit flag register with corresponding 64 locations (20), a 16-byte encryption key register with corresponding 64 locations (30), and a 1024-byte mailbox divided into 64-byte blocks (40).

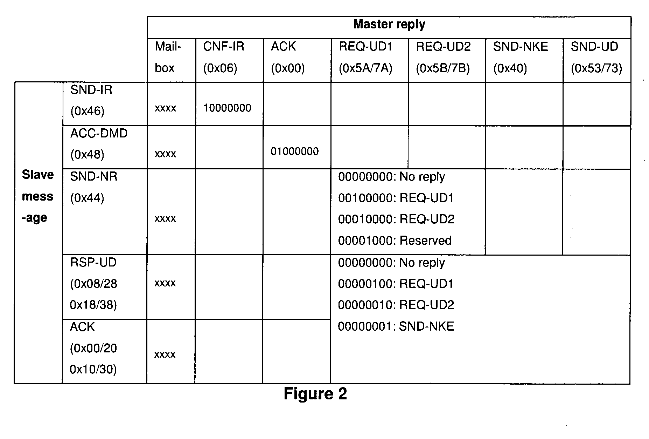

Figure 2 shows an example of an embodyment of the invention with a set of standard messages. Depending on the message from the slave (50), a standard messages is generated by the master (60), with a given priority (70), or pointing to a mailbox (80).

### Detailed description of the invention

By combining the use of standard messages, pre-generated messages and templates in an intelligent message generator, and message priority, it is achieved by the invention that a master can handle many more slave nodes in a much more efficient way with respect to memory usage, timing and processing power. When this is implemented in a separate radio module (such as Radiocrafts RC1180-MBUS3) this will offload the main processor in the system substantially. The invention achieves its objectives by a method according to claim 1.

That a large number of slaves can be handled at the same time in a very flexible way, with minimum usage of memory, is achieved by the invention by registering all slaves in a master in an address register, and related to this register a flag register, where one flag (one bit) can choose which standard messages shall be transmitted, or point to one of more mailboxes. Related to this address register is also an encryption key register, where the unique key for each registered slave is stored, so that the message can be encrypted when transmitted if it is not already encrypted.

The intelligent message generator consist of a mailbox where several pre-generated messages can be stored, and a message generator which can generate standard messages. These standard messages will depend on the message received from a slave, as described in the different protocols.

The mailbox can contain either unique messages for a specific slave (either encrypted or un-encrypted), or they can be templates (generic pattern for the message) where the address is open. In this way many slaves can be answered from one stored message, and the memory usage in the master is substantially reduced. Examples of messages that can be stored in the mailbox are SND-UD, which can have a length up to 255 bytes.

A further improvement and usage of the mailbox is achieved by making it as a daisy chain. A typical mailbox may have space for 1024 bytes, which is divided into 64 byte blocks, which again can be chained together so that messages up to 255 bytes can be stored. In this way it is achieved a flexible message length and the memory requirement in the master is substantially reduced.

Standard messages are generated based on a known pattern that is coded in the message generator. Examples of such standard messages are CNF-IR, ACK, REQ-UD1, REQ-UD2 and SND-NKE. Several different standard messages can be made in this way, and the master choose which standard message to transmit based on the received message, and the priority of standard messages, and which flags that is set for each slave. For example, REQ-UD1 has higher priority than REQ-UD2, and will therefore be sent first, if the flag for both is set.

Standard messages and messages from the mailbox is given a priority, and the flag indicating that a standard messages shall be sent, or a pointer to a mailbox message which shall be sent, can be automatically cleared after a transmission. In this way the master can easily be configured to transmit a sequence of messages autonomic.

A typical implementation could have 16 mailboxes, and 8 standard messages, linked to an 8-bytes address register for 64 slaves, a 16 bit flag register for the 64 slaves, and a related 16-bytes encryption key register for the 64 slaves.

An example on the use of the invention in OMS, is that when a SND-NR message arrives from the slave, the master can according to the specification answer with either SND-UD, REQ-UD1, REQ-UD2, or no answer at all if further communication is not required. According to the invention an address register is used to search and find the actual slave, and the flag register to see if a message shall be generated and transmitted to the actual slave. Further, according to the invention, the message generator is used to generate the standard messages REQ-UD1 or REQ-UD2, while a SND-UD message is generated from the mailbox. Because REQ-UD1 is used to read an alarm or warning, it is given the highest priority, and will be transmitted before any REQ-UD2 message, or a message from the mailbox. The message in the mailbox can be a template where the slave address is filled in and the message is encrypted with the correct key, which is found in the related encryption key register. In this way the master can transmit an answer to ay registered slave within 2-3 ms after reception as required in Wireless M-Bus T2 mode.

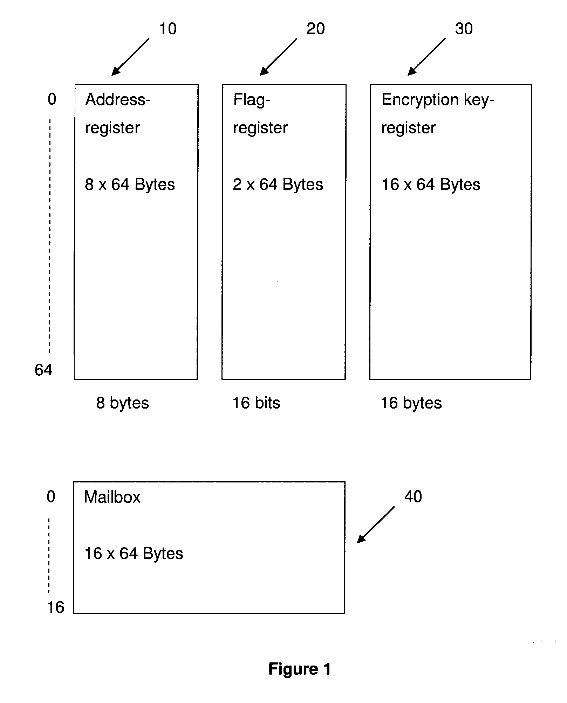

On example of an implementation of the invention is the Radiocrafts RC1180-MBUS3 where this method is implemented in firmware. As shown in figure 1, is there an 8-bytes address register with 64 locations, a 16-bits flag register with 64 locations accordingly, a 16-bytes encryption key register with 64 locations accordingly, and a 1024-bytes mailbox divided into 64 byte blocks. The flag register consist of 8 flags for standard messages, 2 flags indicating weather the messages shall be encrypted/decrypted, and 4 bits pointing to a 64-bytes block in the mailbox, which again can point further in a daisy chain.

## Claims

1. A method for automatic message generation in a wireless M-Bus based communication system, the system comprising
a master and at least one slave;
an address register (10) with a related flag register (20);
an intelligent message generator consisting of
a mailbox (40) where several pre-generated messages, which are unique messages for a specific slave, or templates, where the address is open, are stored, and
a message generator which generates standard messages; the method further comprising, in the master:
registering all slaves in the address register,
receiving a message from a slave,
using the address register to search and find the slave and the flag register to see if a message shall be generated and transmitted to the slave, wherein the flag register comprises flags for selecting which standard message shall be transmitted, or
pointers pointing to one or more mailboxes,
transmitting to the slave either a standard message generated by the message generator or a message generated from the mailbox.

2. The method for automatic message generation according to claim 1, wherein the system further comprises an encryption key register (30), wherein the method further comprises registering an encryption key for the slaves in the encryption key register (30).

3. The method for automatic message generation according to claim 1-2, **characterized in that** standard messages will depend on the received message from the slave.

4. The method for automatic message generation according to claim 1-3, **characterized in that** there is a priority between and among standard messages and pre-generated messages in the mailbox.

5. The method for automatic message generation according to claim 1-4, **characterized in that** the mailbox can contain either pre-encrypted or un-encrypted messages which can be encrypted before transmission using a pre-registered key in the encryption key register.

6. The method for automatic message generation according to claim 1-4, **characterized in that** the mailbox can contain templates where the address and optionally a message number and a signal strength (RSSI) information is open, and can be filled in at the time of transmission, and which can be encrypted prior to transmission using a pre-registered key in the encryption key register.

7. The method for automatic message generation according to claim 1-2, **characterized in that** the mailbox is divided into memory blocks which can make a daisy chain by using the last byte in a block to point to the next block in the chain.

8. The method for automatic message generation according to claim 1-4, **characterized in that** a flag indicating that a standard message shall be transmitted, or the pointer to a mailbox message, can automatically be cleared after transmission and in this way be configured to transmit a sequence of messages fully autonomous.

## Patentansprüche

1. Verfahren zur automatischen Nachrichtenerzeugung in einem auf drahtlosem M-Bus basierten Kommunikationssystem, aufweisend
einen Master und zumindest einen Slave;
ein Adressregister (10) mit einem dazugehörigen Flag-Register (20);
einen intelligenten Nachrichten-Generator bestehend aus
einer Mailbox (40) in der einige vorab-erzeugte Nachrichten, die spezifische Nachrichten für einen bestimmten Slave sind, oder Templates für unbestimmte Adressen sind, gespeichert sind, und
ein Nachrichten-Generator, welcher Standard-Nachrichten erzeugt;
wobei das Verfahren in dem Master weiter aufweist:
• Registrieren aller Slaves in dem Adressregister
• Empfangen einer Nachricht von einem Slave
• Verwenden des Adressregisters zum Suchen und Finden des Slaves und des Flag-Registers, um festzustellen, ob eine Nachricht erzeugt und zu dem Slave gesendet werden soll, wobei das Flag-Register Flags zum Auswählen der zu sendenden Standard-Nachricht oder Zeiger, die auf eine oder mehrere Mailboxen zeigen, aufweist,
• Senden von entweder einer Standard-Nachricht zu dem Slave, die vom Nachrichten-Generator erzeugt wurde, der einer Nachricht, die von der Mailbox erzeugt wurde.

2. Verfahren zur automatischen Nachrichtenerzeugung gemäß Anspruch 1, wobei da System ferner ein Verschlüsselungsschlüssel-Register (30) aufweist, wobei das Verfahren ferner ein Registrieren eines Verschlüsselungsschlüssels für die Slaves in dem Verschlüsselungsschlüssel-Register (30) aufweist.

3. Verfahren zur automatischen Nachrichtenerzeugung gemäß Anspruch 1 oder 2, **dadurch gekennzeichnet, dass** Standardnachrichten in Abhängigkeit zu der empfangenen Nachricht von dem Slave sind.

4. Verfahren zur automatischen Nachrichtenerzeugung gemäß Anspruch 1 bis 3, **dadurch gekennzeichnet, dass** es eine Priorität zwischen und unter den Standardnachrichten und den vorab-erzeugten Nachrichten in der Mailbox gibt.

5. Verfahren zur automatischen Nachrichtenerzeugung gemäß einem der Ansprüche 1 bis 4, **dadurch gekennzeichnet, dass** die Mailbox entweder vorverschlüsselte oder unverschlüsselte Nachrichten enthalten kann, welche vor der Versendung unter Verwendung eines vorregistrierten Schlüssels in dem Verschlüsselungsschlüsselregister verschlüsselt werden können.

6. Verfahren zur automatischen Nachrichtenerzeugung gemäß einem der Ansprüche 1 bis 4, **dadurch gekennzeichnet, dass** die Mailbox Templates enthalten kann, bei denen die Adresse und die optionalen Nachrichtenanzahl und Signalstärkeninformation (RSSI) unbestimmt sind, und die zum Zeitpunkt der Versendung ausgefüllt werden können, und welche vor der Versendung unter Verwendung des vorregistrierten Schlüssels in dem Verschlüsselungsschlüsselregister verschlüsselt werden können.

7. Verfahren zur automatischen Nachrichtenerzeugung gemäß Anspruch 1 oder 2, **dadurch gekennzeichnet, dass** die Mailbox in Speicherblöcke aufgeteilt werden kann, welche eine Daisy-Chain-Verkettung unter Verwendung des letzten Bytes in einem Block, der auf den nächsten Block in der Kette verweist, ausbilden können.

8. Verfahren zur automatischen Nachrichtenerzeugung gemäß einem der Ansprüche 1 bis 4, **dadurch gekennzeichnet, dass** ein Flag, das anzeigt, dass eine Standardnachricht versendet werden soll, oder der Zeiger auf eine Mailbox-Nachricht automatisch nach der Versendung gelöscht werden kann und auf diesem Weg konfiguriert werden kann, um eine Sequenz von Nachrichten vollständig autonom zu senden.

## Revendications

1. Procédé de génération automatique de messages dans un système de communication à base de bus M sans fil, le système comprenant :
un composant maître et au moins un composant esclave ;
un registre d'adresse (10) avec un registre à drapeaux connexe (20) ;
un générateur de messages intelligents composé de :
une boîte aux lettres (40) où plusieurs messages pré-générés, lesquels représentent des messages uniques pour un composant esclave spécifique, ou des modèles, où l'adresse est laissée vierge, sont stockés ; et
un générateur de messages qui génère des messages standard ;
le procédé comportant en outre, dans le composant maître, les étapes ci-dessous consistant à :
enregistrer tous les composants esclaves dans le registre d'adresse ;
recevoir un message en provenance d'un composant esclave ;
utiliser le registre d'adresse en vue de rechercher et de trouver le composant esclave et le registre à drapeaux pour savoir si un message doit être généré et transmis au composant esclave, dans lequel le registre à drapeaux comporte des drapeaux pour sélectionner quel message standard doit être transmis, ou des pointeurs pointant vers une ou plusieurs boîtes aux lettres ; et
transmettre, au composant esclave, un message standard généré par le générateur de messages ou un message généré à partir de la boîte aux lettres.

2. Procédé de génération automatique de messages selon la revendication 1, dans lequel le système comporte en outre un registre de clés de chiffrement (30), dans lequel le procédé comporte en outre l'étape consistant à enregistrer une clé de chiffrement pour les composants esclaves dans le registre de clés de chiffrement (30).

3. Procédé de génération automatique de messages selon les revendications 1 et 2, **caractérisé en ce que** les messages standards dépendront du message reçu à partir du composant esclave.

4. Procédé de génération automatique de messages selon les revendications 1 à 3, **caractérisé en ce qu**'il existe un ordre de priorité entre et parmi les messages standards et les messages pré-générés dans la boîte aux lettres.

5. Procédé de génération automatique de messages selon les revendications 1 à 4, **caractérisé en ce que** la boîte aux lettres peut contenir des messages pré-chiffrés ou des messages non chiffrés qui peuvent être chiffrés avant la transmission en faisant appel à une clé préenregistrée dans le registre de clés de chiffrement.

6. Procédé de génération automatique de messages selon les revendications 1 à 4, **caractérisé en ce que** la boîte aux lettres peut contenir des modèles où l'adresse, et facultativement un numéro de message et des informations d'intensité de signal (RSSI), sont laissés vierges, et peuvent être remplis au moment de la transmission, et lesquels peuvent être chiffrés avant la transmission, en utilisant une clé préenregistrée, dans le registre de clés de chiffrement.

7. Procédé de génération automatique de messages selon les revendications 1 et 2, **caractérisé en ce que** la boîte aux lettres est divisée en blocs de mémoire qui peuvent former une guirlande, en utilisant le dernier octet dans un bloc pour pointer vers le bloc suivant dans la guirlande.

8. Procédé de génération automatique de messages selon les revendications 1 à 4, **caractérisé en ce qu**'un drapeau indiquant un message standard peut être transmis, ou en ce que le pointeur vers un message de boîte aux lettres peut être automatiquement effacé après transmission, et de cette façon être configuré en vue de transmettre une séquence de messages de manière totalement autonome.
